# EUROPÄISCHE PATENTSCHRIFT

(11) **EP 0 562 269 B1**
(45) Veröffentlichungstag und Bekanntmachung des Hinweises auf die Patenterteilung: **24.04.1996**
(21) Anmeldenummer: 93102522.5
(22) Anmeldetag: 18.02.1993
(51) Int. Cl.: B41F 13/00, F16L 39/04

(54) **Drehdurchführung**
Turnable connection
Jonction rotative

(30) Priorität: 27.03.1992 DE 4210009
(43) Veröffentlichungstag der Anmeldung: 29.09.1993
(73) Patentinhaber: Heidelberger Druckmaschinen Aktiengesellschaft, D-69019 Heidelberg (DE)
(72) Erfinder: Becker, Willi, W-6919 Bammental (DE)
(74) Vertreter: Stoltenberg, Baldo Heinz-Herbert

(56) Entgegenhaltungen:
- EP-A- 0 298 238
- EP-A- 0 435 164

## Beschreibung

Die Erfindung betrifft eine Drehdurchführung zum Zuleiten eines Saug- und/oder Druckmediums zu einem drehbar gelagerten Teil, einer Druckmaschine, mit einem Stator und einem Rotor, wobei Stator und Rotor während der unabhängig von der Drehwinkelstellung des Rotors im Stillstand möglichen Zuleitung des Mediums über mit Dichtgegenelementen zusammenwirkenden Dicht- elementen zueinander zur Kupplung mindestens eines Mediumverbindungsweges abgedichtet sind.

In vielen Bereichen des Maschinenbaus besteht die Anforderung, einem drehenden Teil ein Saug- bzw. Druckmedium, z. B. Preßluft, zuzuführen.

Aus der europäischen Patentanmeldung 0 435 164 ist ein Drehübertrager zur Einführung von Druckluft in ein sich drehendes Teil einer Druckmaschine bekannt, der auf einem Rotor mehrere Rillenkugellager aufweist, die das Teil lagern. Zwischen jeweils zwei Rillenkugellagern wird ein Druckluftkanal gebildet. Die Rillenkugellager werden in einer ortsfesten Gehäusebuchse getragen, die einen Stator bildet. Zwischen dem Stator und dem Rotor wird im Bereich zwischen jeweils zwei benachbarten Rillenkugellagern eine Ringkammer gebildet, die über eine Bohrung mit Druckluft beaufschlagbar ist. Dichtscheiben legen sich unter dem Druck der Preßluft seitlich an die Innen- und Außenringe der Rillenkugellager an und sorgen so für eine Abdichtung. Im Rotor sind zu jeder Ringkammer führende Kanäle ausgebildet, die die Preßluft zur gewünschten Stelle des Teils zuführen. Das Zuführen der Preßluft erfolgt vorzugsweise im Stillstand des drehbar gelagerten Teils, so daß die Dichtscheiben insoweit keinem Reibverschleiß unterliegen. Befindet sich jedoch das drehende Teil im Betrieb, so werden die Dichtscheiben zwar wegen der drucklosen Ringkammern lose zwischen den Flanken der Rillenkugellagern und entsprechenden Sicherungsringen gehalten, jedoch drehen sie sich mit oder es drehen sich die Innenringe der Rillenkugellager an ihnen vorbei, so daß durch Gleitreibung ein Verschleiß auftritt, der eine Partikelbildung zur Folge hat. Diese Partikel können zu Dichtproblemen führen. Der Verschleiß der Dichtscheiben erfordert überdies zusätzliche Wartungsarbeiten; außerdem ist für jede Ringkammer und damit für jede Druckluftverbindung mindestens ein relativ teures Rillenkugellager erforderlich.

Der Erfindung liegt deshalb die Aufgabe zugrunde, eine Drehdurchführung der eingangs genannten Art zu schaffen, die verschleißfrei arbeitet. Ferner soll sie kompakt und preiswert aufgebaut sein.

Diese Aufgabe wird erfindungsgemäß dadurch gelöst, daß Stator und Rotor relativ zueinander axial aus einer ersten Stellung in eine zweite Stellung verschiebbar gelagert sind, wobei in der ersten Stellung die Dichtelemente an den Dichtgegenelementen anliegen und in der zweiten Stellung ein Abstand zwischen den Dichtelementen und den Dichtgegenelementen besteht. Durch die erfindungsgemäße axiale Verschiebbarkeit ist es möglich, im Stillstand den Mediumverbindungsweg herzustellen, wobei aufgrund des Stillstandes kein Verschleiß an den Dichtelementen sowie Dichtgegenelementen auftritt. Während des Maschinenlaufes befinden sich durch axiale Rückstellung die Dichtelemente im Abstand zu den Dichtgegenelementen, wodurch ebenfalls verschleißfrei gearbeitet wird.

Mit der erfindungsgemäßen Drehdurchführung ist es insbesondere möglich, eine Druckform am Plattenzylinder einer Druckmaschine zu spannen, wobei durch Druckluftzuführung die Spannvorrichtung gegen Federkraft geöffnet, die Druckform zugeführt und durch Abschalten der Druckluft der Spannvorgang ausgeführt wird. Die Erfindung ist jedoch nicht auf eine einzige derartige Betätigung begrenzt, sondern sie kann noch für weitere Funktionen mittels einer entsprechenden Anzahl von Mediumverbindungswegen eingesetzt werden.

Nach einer Weiterbildung der Erfindung ist vorgesehen, daß der Stator eine Anschlußfläche aufweist, die mit einer dem Rotor angehörenden Stirnfläche, bei der Verschiebebewegung zusammenwirkt. Die Mediumverbindungswege münden sowohl in die Stirnfläche als auch in die Anschlußfläche, so daß beim Zusammenführen dieser Bauteile der Verbindungsweg durch Anlage der Dichtelemente an die Gegendichtelemente (erste Stellung) hergestellt und durch Herbeiführen eines Abstandes der Bauteile (mittels axialer Verschiebebewegung) eine Unterbrechung der Verbindungswege (zweite Stellung) möglich ist. Vorzugsweise ist der Stator axial verschieblich sowie drehfest und der Rotor axial ortsfest sowie drehbar angeordnet. Die Verschiebung des Stators erfolgt koaxial zur Drehachse, also zentrisch zum Rotor.

Für einen besonders einfachen Aufbau ist vorgesehen, daß der Stator zum Anfahren der ersten bzw. zweiten Stellung mittels des gleichen, dem Rotor zuleitbaren Mediums verschiebbar ist. Sofern es sich bei dem Medium z. B. um Druckluft handelt, wird diese Druckluft einerseits dem drehbar gelagerten Teil über die erfindungsgemäße Drehdurchführung zur Erfüllung entsprechender Funktionen zugeführt und dient andererseits dazu, die Axialverschiebung herbeizuführen, so daß für diese Verschiebebewegung keine separate Kraftquelle erforderlich ist. Gleichwohl ist es jedoch auch möglich, für die Verschiebebewegung ein Fremdmedium zu verwenden, d.h., ein Medium, das sich von dem dem drehbar gelagerten Teil zuzuleitenden Medium unterscheidet. Dies erfordert jedoch einen höheren Aufwand.

Der Stator ist vorzugsweise von einem Kolben gebildet oder er weist einen Kolben auf, wobei der Kolben axial verschieblich in einem ortsfesten Zylinder geführt ist. Der Kolben weist die Anschlußfläche auf; sie wird vorzugsweise von einer Kolbenstirnseite gebildet.

Zur Herstellung eines druckdichten Mediumverbindungsweges ist vorgesehen, daß in die Anschlußfläche bzw. die Stirnfläche Kanäle und in die Stirnfläche bzw. die Anschlußfläche Ringkanäle münden. Je nach gewählter Ausführungsform der vorstehend genannten Alternativen, weist die Anschlußfläche also entweder Kanäle oder Ringkanäle auf. Sofern die Anschlußfläche mit Ringkanälen ausgestattet ist, besitzt die korrespondierende Stirnfläche Kanäle. Ist die Stirnfläche mit Kanälen versehen, so weist die Anschlußfläche Ringkanäle auf. Stets ist vorgesehen, daß die Ringkanäle von Ringdichtungen berandet sind. Insofern bilden die Ringdichtungen die vorstehend erwähnten Dichtelemente, während die Dichtgegenelemente von den Flächenbereichen gebildet sind, gegen die sich die Ringdichtungen beim Kontakt zwischen Rotor und Stator anlegen.

Die Erfindung ist -wie erwähnt- nicht auf einen einzigen Mediumverbindungsweg beschränkt, sondern es ist durchaus möglich, daß mehrere Verbindungswege gleichzeitig hergestellt werden. Vorzugsweise liegt eine Mediumverbindung in der Drehachse des Teils bzw. Rotors, so daß eine zur Drehachse des Rotors koaxiale Mediumverbindung besteht, bei der sowohl an der Stirnfläche als auch an der Anschlußfläche ein Kanal ausgebildet ist, wobei mindestens eines der in der Stirnfläche bzw. der Anschlagfläche liegenden Kanalenden von einer Ringdichtung umgeben ist.

Gemäß dem vorstehend erläuterten Ausführungsbeispiel der Erfindung bilden die Ringdichtungen Axialdichtungen.

Die erwähnten Ringkanäle liegen bevorzugt koaxial zueinander und auch koaxial zur Drehachse.

Insbesondere kann vorgesehen sein, daß in die Mantelfläche des Kolbens mit den Kanälen bzw. Ringkanälen der Anschlußfläche verbundene Ringnuten münden, die in der ersten Stellung des Stators mit in die Innenfläche des Zylinders mündenden Zuleitungen für das Medium kommunizieren. Allerdings ist auch eine alternative Ausgestaltung möglich, bei der in die Mantefläche des Kolbens mit den Kanälen bzw. Ringkanälen der Anschlußfläche verbundene Radialbohrungen münden, die in der ersten Stellung des Stators mit in die Innenfläche des Zylinders mündenden Ringnuten kommunizieren, wobei über die Ringnuten das Medium zuführbar ist. Mittels der vorstehend genannten Ausführungsvarianten läßt sich das Medium über den Zylinder und über den Kolben der Verbindungsstelle zwischen Stator und Rotor zuführen. Natürlich ist es auch möglich, daß Ringnuten des Zylinders Ringnuten des Kolbens gegenüberliegen, um drehstellungsunabhängige Verbindungen zu schaffen.

Um die einzelnen Mediumverbindungswege untereinander abzudichten, sind beidseitig der Ringnuten vorzugsweise Dichtringe angeordnet.

Der Kolben kann mittels des Mediums aus der zweiten Stellung in die erste Stellung verbracht werden. Um ihn in seine Ausgangsstellung zurückführen zu können, ist vorzugsweise eine Rückstellfeder vorgesehen, die ihn in Richtung der zweiten Stellung beaufschlagt. Alternativ ist es selbstverständlich auch möglich, daß der Kolben mittels des Mediums in die zweite Stellung gebracht wird und daß er in die erste Stellung durch die Rückstellfeder gedrängt wird. In diesem Fall kann es sich beispielsweise bei dem Medium um ein Saugmedium, z. B. um Saugluft, oder um ein Druckmedium, z. B. um Preßluft, handeln.

Nach einem weiteren Ausführungsbeispiel der Erfindung ist vorgesehen, daß die Ringdichtungen und/oder die Dichtringe an den Kolben angespritzt oder anvulkanisiert sind. Je nach Ausführungsform ist es auch möglich, daß die angespritzten bzw. anvulkanisierten Abdichtelemente sich an der Stirnfläche des Rotors oder an der Innenfläche des Zylinders befinden.

Nach einer weiteren Ausführungsform ist vorgesehen, daß am Zylinder ein Lager für den Rotor angeordnet ist. Insofern übernimmt der Zylinder eine Doppelfunktion, indem er zum einen den Kolben axial verschieblich führt und zum anderen das Lager für das sich drehende Teil trägt.

Eine besonders einfache Bauform ergibt sich, wenn dem Stator über flexible Leitungen das Medium zugeführt wird. Dies hat zur Folge, daß eine Zuführung über die Wandung des Zylinders -so wie sie bei der zuvor beschriebenen Ausführungsform vorgesehen istentfallen kann, wodurch sich der Aufbau vereinfacht. Bei der Ausführungsform, bei der die Mediumverbindungswege durch die Zylinderwandung hindurchgehen, lassen sich selbstverständlich auch flexible Leitungen einsetzen. Es ist jedoch auch möglich, fest verlegte Leitungen zu benutzen. Macht jedoch die das Medium zuführende Leitung die Axialbewegung des Stators mit, so ist es erforderlich, die genannten flexiblen Leitungen einzusetzen. Der Stator weist Anschlüsse für die flexiblen Leitungen auf, wobei die Anschlüsse mit den Ringkanälen bzw. Kanälen der Anschlußfläche kommunizierend verbunden sind. Hierzu ist vorzugsweise vorgesehen, daß der Kolben mit einer Teillänge aus dem Zylinder herausragt und daß die flexiblen Leitungen zur Mantelfläche des herausragenden Teils des Kolbens führen. An dieser Mantelfläche befinden sich die Anschlüsse für die flexiblen Leitungen. Die Anschlüsse sind über entsprechende, vorzugsweise im Innern des Kolbens verlaufende Verbindungen mit Kanälen oder Ringkanälen der Anschlußfläche kommunizierend verbunden.

Nach einem weiteren Ausführungsbeispiel der Erfindung weist der Stator einen Aufnahmekanal für den Rotor bzw. für einen Abschnitt des Rotors auf und ist axial zu dem Rotor zur Einnahme der ersten bzw. zweiten Stellung verschiebbar. Hierzu kann der Stator auf dem Rotor verschieblich gelagert sein oder er weist eine maschinengestellabgestützte Lagerung auf und umschließt somit nur den Abschnitt des Rotors.

Zur Schaffung der Mediumverbindungswege ist vorgesehen, daß der Rotor und/oder die Wandung des Aufnahmekanals zur Verschieberichtung (Axialrichtung) derart verlaufende Dichtflächen, insbesondere Kegelflächen, zur Bildung von Ringnuten aufweist, daß diese in der ersten Stellung gegen Dichtringelemente in der Wandung des Aufnahmekanals und/oder des Rotors treten und in der zweiten Stellung einen Abstand zu den Dichtringelementen einnehmen. Die Formulierung "und/oder" deutet an, daß man -je nach Ausführungsform- entweder in der Wandung des Aufnahmekanals die Dichtringelemente und am Rotor die Kegelflächen oder an der Wandung des Aufnahmekanals die Kegelflächen und an dem Rotor die Dichtringelemente vorsehen kann. Je nach Anzahl der zu schaffenden Mediumverbindungswege ist eine entsprechende Anzahl von Ringnuten mit den zugehörigen Dichtringelementen vorzusehen. Bevorzugt liegen die Ringnuten bei einem Ausführungsbeispiel mit mehreren Mediumverbindungswegen axial beabstandet zueinander. Insbesondere kann ein gleich großer axialer Abstand vorgesehen sein. Stets ist jedoch sicherzustellen, daß die Dichtfunktion synchron auftritt, d. h., bei allen Me- diumverbindungswegen muß in der ersten Stellung die Abdichtung der Verbindungswege vorliegen, um die Vorrichtung einfach bedienen zu können. Gleichwohl ist es denkbar, daß mehrere "erste Stellungen" vorhanden sein können, die axial beabstandet zueinander liegen, wobei in jeder der ersten Stellungen zumindest ein Mediumverbindungsweg hergestellt wird.

Aufgrund der Kegelflächen bilden sich Ringräume zwischen Stator und Rotor aus. Die Kegelflächen können bei der Herstellung vorzugsweise durch Ringeinstiche erzeugt werden. In der ersten Stellung sind diese Ringräume in axialer Richtung jeweils beidendig mittels der Dichtringelemente nach außen bzw. gegenüber einem benachbarten Ringraum abgedichtet. Über den jeweiligen Ringraum kann dann die Übertragung des Mediums vorgenommen werden.

Insbesondere ist vorgesehen, daß an eine durchmessergrößere Flanke jeder Kegelfläche eine Stufe angrenzt, die zu einer durchmesserkleineren Flanke der benachbarten Kegelfläche abfällt. Je nach Anzahl der möglichen Mediumverbindungswege, müssen entsprechend viele Stufen vorgesehen werden, wobei eine Stufe mehr erforderlich ist.

Für die Zuführung des Mediums zum bzw. in das Innere des Rotors münden in die Ringnuten Kanäle des Rotors.

Um von außen das Medium zuführen zu können, münden in den Aufnahmekanal des Stators Zuleitungen, die in der ersten Stellung mit den jeweiligen Ringnuten kommunizieren.

Im Hinblick auf die Lagerung der verschiedenen Bauteile sind mehrere Varianten möglich. Nach einer Ausführungsform ist vorgesehen, daß am Stator ein Lager für den Rotor angeordnet ist. Mithin übernimmt der Stator neben seiner eigenen axialen Verschieblichkeit die Funktion, den Rotor zu lagern. Alternativ ist es jedoch auch möglich, daß der Stator verschiebbar auf dem Rotor gelagert ist, wobei der Rotor maschinengestellseitige, feste Lager aufweist. Schließlich ist als weitere Variante denkbar, daß der Stator an einem ortsfesten Maschinengestell gelagert ist und dann entweder - wie vorstehend beschrieben- gleichfalls den Rotor lagert oder daß der Rotor separat am ortsfesten Maschinengestell lagert.

Bei dem zuvor beschriebenen Ausführungsbeispiel ist vorgesehen, daß die Dichtringelemente für die Dichtfunktion gegen die Kegelflächen treten. Bei einer weiteren Ausführungsform kann jedoch auch vorgesehen sein, daß jede Kegelfläche an ihrer durchmessergrößeren Flanke in einen zylindrischen Abschnitt des Rotors übergeht, wobei in der ersten Stellung das entsprechende Dichtringelement an dem zugehörigen zylindrischen Abschnitt anliegt. Dies führt zu einer radialen Abdichtung.

Die Zeichnungen veranschaulichen die Erfindung anhand mehrerer Ausführungsbeispiele, und zwar zeigt:
- Figur 1: einen Längsschnitt durch eine Drehdurchführung nach einem ersten Ausführungsbeispiel,
- Figur 2: einen Längsschnitt durch ein weiteres Ausführungsbeipiels einer Drehdurchführung,
- Figur 3: einen Längsschnitt durch ein weiteres Ausführungsbeispiel einer Drehdurchführung,
- Figur 4: eine Stirnansicht auf den Stator des Ausführungsbeispiels der Figur 1 in Richtung des Pfeils IV,
- Figur 5: eine Stirnansicht auf den Stator des Ausführungsbeispiels der Figur 3 in Richtung des Pfeils V,
- Figur 6: ein weiteres Ausführungsbeispiel einer Drehdurchführung im Längsschnitt,
- Figur 7: einen Längsschnitt eines weiteren Ausführungsbeispiels einer Drehdurchführung,
- Figur 8: das Ausführungsbeispiel der Figur 7, jedoch in einer anderen Axialstellung,
- Figur 9: einen Längsschnitt durch ein weiteres Ausführungsbeispiel einer Drehdurchführung,
- Figur 10: die Drehdurchführung gemäß Figur 9 in einer anderen Axialstellung und
- Figur 11: ein weiteres Ausführungsbeispiel im Längsschnitt.

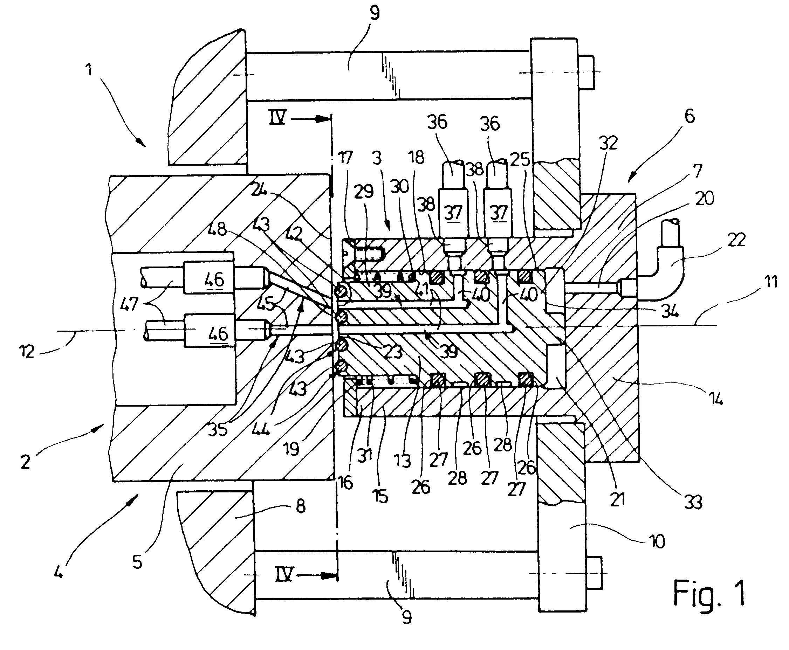

Die Figur 1 zeigt eine Drehdurchführung 1 zum Zulebten eines Saug- oder Druckmediums, insbesondere Druckluft, zu einem drehbar gelagerten Teil 2. Die Drehdurchführung 1 weist einen Stator 3 und einen Rotor 4 auf. Der Rotor 4 wird von einem Zapfen 5 eines Plattenzylinders einer Druckmaschine gebildet. Insofern handelt es sich bei dem drehbar gelagerten Teil 2 um den erwähnten Plattenzylinder. Der Stator 3 weist eine Kolben/Zylindereinheit 6 auf. Der Zylinder 7 der Kolben/Zylindereinheit 6 ist an einem ortsfesten Maschinengestell 8 der Druckmaschine über Distanzbolzen 9 und Träger 10 derart gehalten, daß die Zylindermittelachse 11 koaxial zur Drehachse 12 des drehbar gelagerten Teils 2 und somit auch koaxial zum Zapfen 5 verläuft.

Sowohl der Zylinder 7, als auch der Kolben 13 und auch der Zapfen 5 weisen in bezug auf die Zylindermittelachse 11 bzw. die Drehachse 12 einen kreisförmigen Querschnitt auf.

Der Zylinder besitzt eine Gehäusegrundplatte 14, von der rechtwinklig sowie einstückig eine Zylinderwand 15 ausgeht. Auf den Kopf 16 der Zylinderwand 15 ist eine Ringplatte 17 geschraubt, deren Innendurchmesser kleiner als der Innendurchmesser der Innenfläche 18 des Zylinders 7 ist, wodurch eine Ringstufe 19 gebildet wird. Die Gehäusegrundplatte 14 wird parallel sowie beabstandet von der Zylindermittelachse 11 von einer Bohrung 20 durchsetzt, die mit einem Ende in den Zylinderinnenraum 21 und mit dem anderen Ende zu einem Anschluß 22 führt, der mit einem Steuermedium, z. B. Druckluft, beaufschlagbar ist. Diese Druckluft kann der gleichen Quelle entstammen, wie die mittels der Drehdurchführung 1 dem drehbaren gelagerten Teil 2 zuführbare Druckluft.

Der Kolben 13 überragt in seiner zurückgezogenen Stellung mit einer Anschlußfläche 23 die Ringplatte 17, wobei die Anschlußfläche 23 mit geringem Abstand einer Stirnfläche 24 des Zapfens 5 gegenüberliegt. Anschlußfläche 23 und Stirnfläche 24 sind jeweils eben ausgebildet sowie parallel zueinander angeordnet. Beide Flächen 23, 24 verlaufen senkrecht zur Drehachse 12.

Die Mantelfläche 25 des Kolbens 13 weist mehrere, voneinander beabstandete Ringvertiefungen 26 auf, in denen Dichtringe 27 zur Abdichtung gegenüber der Innenfläche 18 des Zylinders 7 einliegen. Zwischen jeweils zwei Dichtringen 27 ist eine Ringnut 28 in der Mantelfläche 25 des Kolbens 13 ausgebildet. Ausgehend von der Anschlußfläche 23 weist der Kolben 13 einen durchmesserkleineren Abschnitt 29 auf, der über eine Ringstufe 30 in die Mantelfläche 25 übergeht, die mit der Innenfläche 18 des Zylinders 7 zusammenwirkt. In dem durch den Abschnitt 29 gebildeten Ringraum befindet sich eine Rückstellfeder 31, die als Schraubendruckfeder ausgebildet ist, wobei sich ein Ende der Rückstellfeder 31 an der Ringstufe 19 und das andere Ende der Rückstellfeder 31 an der Ringstufe 30 abstützt. Durch diese Rückstellfeder 31 wird der Kolben in Richtung auf die Gehäusegrundplatte 14 beaufschlagt. Das rückwärtige Ende 32 des Kolbens 13 weist einen zentralen Abstandszapfen 33 auf, der die Kolbenstirnwand 34 überragt und in der zurückgezogenen Stellung des Kolbens 13 gegen die Gehäusegrundplatte 14 tritt.

Zur Ausbildung von Mediumverbindungswegen 35 zur Zuführung der Druckluft zum drehbar gelagerten Teil 2 sind entsprechend der gewünschten Funktion mit Druckluft beaufschlagbare Leitungen 36 vorgesehen, die über Anschlüsse 37 mit Kanälen 38 verbunden sind, welche die Zylinderwand 15 jeweils im Bereich zwischen den Dichtringen 27 durchsetzen. Diese Kanäle 38 kommunizieren mit den Ringnuten 28 des Kolbens 13. Jede Ringnut 28 ist mit einer Zuleitung 39 verbunden, die zur Anschlußfläche 23 führt. Jede Zuleitung 39 besteht aus einer von der entsprechenden Ringnut 28 ausgehenden Radialbohrung 40, die eine Axialbohrung 41, welche von der Anschlußfläche 23 ausgeht, kreuzt. In der Anschlußfläche 23 des Kolbens 13 liegen Ringkanäle, in die die Axialbohrungen 41 münden oder die Dichtelemente 43 bilden diese Ringkanäle 42. Die Ringkanäle 42 sind beidseitig von Dichtelementen berandet, die als Ringdichtungen 44 ausgebildet sind. Diese Ringdichtungen 44 bilden Axialdichtungen. Die zuvor erwähnten Dichtringe 27 hingegen bilden Radialdichtungen. In die Stirnfläche 24 münden Kanäle 45, die zu Anschlüssen 46 führen, an die Leitungen 47 angeschlossen sind, die zu mittels der Druckluft zu betätigenden Funktionseinheiten, z. B. eine Druckformspannvorrichtung, des drehbar gelagerten Teils 2 führen. Die jeweilige in der Stirnfläche 24 liegende Mündung der Kanäle 45 kann mit einem jeweils zugeordneten Ringkanal 42 der Anschlußfläche 23 des Kolbens 13 zusammenwirken. Der in der Zylindermittelachse 11 bzw. Drehachse 12 verlaufende Mediumverbindungsweg 35, bei dem die Axialbohrung 41 und der Kanal 45 zentral verlaufen, ist kein Ringkanal 42 an der Anschlußfläche 23 notwendig; vielmehr endet die Axialbohrung 41 als Kanalöffnung in der Anschlußfläche 23, die mit der entsprechenden Öffnung des Kanals 45 zusammenwirken kann.

Die erfindungsgemäße Drehdurchführung 1 arbeitet folgendermaßen:
Während des Druckbetriebs rotiert der Druckformzylinder, so daß sich der Rotor 4 um die Drehachse 12 dreht. Der Kolben 13 nimmt die in der Figur 1 gezeigte zurückgezogene Stellung ein, d. h. er wird von der Rückstellfeder 31 mit seinem Abstandszapfen 33 gegen die Gehäusegrundplatte 14 gedrängt. Soll nun beispielsweise eine neue Druckform auf den Druckzylinder gespannt werden, so stoppt die Druckmaschine; das Teil 2 befindet sich im Stillstand. Damit ruht auch der Rotor 4, so daß relativ zum Stator 3 keine Rotationsbewegung vorliegt. Der Kolben wird nun durch Zuleitung von Druckluft durch den Anschluß 22 und die Bohrung 20 aus der zurückgezogenen Stellung in eine vorgeschobene Stellung verbracht, wobei sich die Anschlußfläche 23 in Richtung auf die Stirnfläche 24 bewegt. Der Kolben 13 wird also axial bewegt, wobei am Ende dieser Axialbewegung die Dichtelemente 43 gegen Dichtgegenelemente 48 an der Stirnfläche 24 treten. Bei den Dichtgegenelementen 48 handelt es sich um die Bereiche der Stirnfläche 24, gegen die die Ringdichtungen 44 treten. Aufgrund der rotationssymmetrischen Ausbildung der Ringkanäle 42 ist unabhängig von der Drehwinkelstellung des Teils 2 stets in der vorgeschobenen Stellung des Kolbens 13 ein Mediumverbindungsweg 35 bzw. sind mehrere Mediumverbindungswege 35 hergestellt. Aus der Figur 1 ist erkennbar, daß in der zurückgezogenen Stellung des Kolbens 13 ein Axialversatz zwischen den Radialbohrungen 40 und den Kanälen 38 besteht. In der vorgeschobenen Stellung des Kolbens 13 wird dieser Axialversatz aufgehoben, d. h., die Radialbohrungen 40 fluchten mit den Kanälen 38. Über eine geeignete Steuereinrichtung kann nun Druckluft über die Leitungen 36 in gewünschter Form zugeführt und über den Weg der Anschlüsse 37, der Kanäle 38, der Radialbohrungen 40, der Axialbohrungen 41, der Ringkanäle 42, der Kanäle 45, der Anschlüsse 46 und der Leitungen 47 entsprechenden Aggregaten, z. B. der Spanneinrichtung des Plattenzylinders, zugeführt werden. Im Ausführungsbeispiel der Figur 1 sind lediglich zwei Mediumverbindungswege 35 dargestellt. Es ist jedoch auch möglich, lediglich einen Mediumverbindungsweg 35 oder aber auch mehr als zwei Mediumverbindungswege 35 vorzusehen. Ist die Betätigungfunktion durch Zuleitung von Druckluft am rotierenden Teil 2 abgeschlossen, so wird der Zylinderinnenraum 21 durch Öffnen der Zuleitung drucklos und die Rückstellfeder 31 schiebt den Kolben 13 in die zurückgezogene Stellung zurück. Dabei nehmen die Dichtelemente 43 einen axialen Abstand zu den Dichtgegenelementen 48 an. Beim folgenden Betrieb, also der Rotation des Teils 2, kann somit kein Verschleiß an den Ringdichtungen 44 auftreten. Im Zuge dieser Anmeldung ist die vorgeschobene Stellung des Kolbens 13 als erste Stellung und die zurückgezogene Stellung des Kolbens 13 als zweite Stellung bezeichnet.

Bemerkt sei noch, daß die gleiche Quelle das Druckmedium für die Axialbewegung des Kolbens 13 und auch für die Speisung der Mediumverbindungswege 35 liefern kann, da die Fläche der Kolbenstirnwand 34 größer ist als die Summenfläche der einzelnen Ringkanäle 42, so daß auch dann, wenn sämtliche Mediumverbindungswege 35 mit Druckluft beaufschlagt werden, sichergestellt ist, daß der Kolben 13 nicht in Richtung der zurückgezogenen Stellung (zweite Stellung) zurückgedrängt wird. Undichtigkeiten können daher insoweit nicht auftreten.

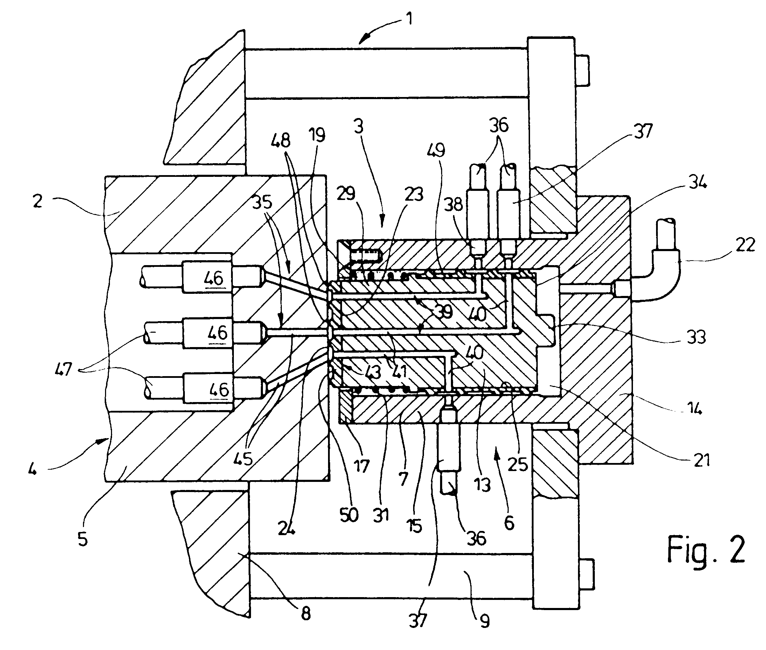

Die Figur 2 zeigt ein weiteres Ausführungsbeispiel einer Drehdurchführung 1, die grundsätzlich der des Ausführungsbeispiels der Figur 1 entspricht. Es besteht lediglich der Unterschied, daß anstelle von zwei Mediumverbindungswegen 35 nunmehr drei Mediumverbindungswege 35 vorgesehen sind und daß die Dichtringe 27 sowie die Ringdichtungen 44 nicht in entsprechenden Vertiefungen des Kolbens 13 einliegen, sondern auf die Mantelfläche 25 bzw. die Anschlußfläche 23 des Kolbens 13 als entsprechende vorzugsweise einstückige Abdichtelemente 49 bzw. 50 aufvulkanisiert sind. Im Ausführungsbeispiel der Figur 2 ist der Kolben in der ersten Stellung, d.h., in der vorgeschobenen Stellung, dargestellt.

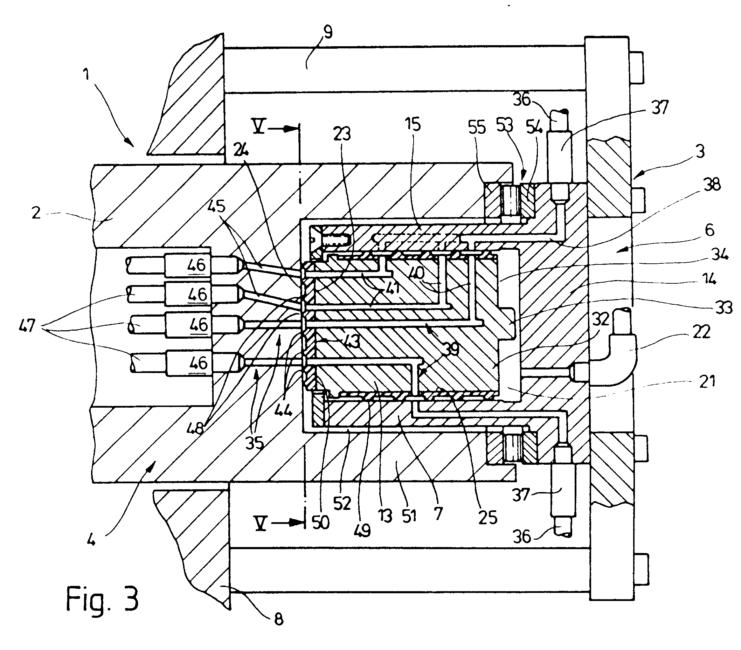

Die Figur 3 zeigt wiederum ein anderes Ausführungsbeispiel einer Drehdurchführung 1. Im nachfolgenden wird lediglich auf die Unterschiede zum Ausführungsbeispiel der Figur 1 eingegangen; die übrige Ausbildung entspricht dem Ausführungsbeispiel der Figur 1 bzw. dem der Figur 2. Auch beim Ausführungsbeispiel der Figur 3 sind durchgehende Abdichtelemente 49 bzw. 50 durch Vulkanisation oder dergleichen auf die Anschlußfläche 23 des Kolbens 13 bzw. die Innenfläche 18 des Kolbens 13 aufgebracht. Jedes Abdichtelement 49 bzw. 50 ist einstückig durchgehend ausgebildet, wobei stets benachbart und beabstandet voneinander entsprechende Radialstege bzw. Axialstege ausgebildet sind, die die Funktion der im Ausführungsbeispiel der Figur 1 beschriebenen Dichtringe 27 bzw. Dichtelemente 43 übernehmen.

Im Ausführungsbeispiel der Figur 3 sind vier Mediumverbindungswege 35 ausgebildet. Insbesondere ist dort vorgesehen, daß der Rotor 4 eine sich in Axialrichtung erstreckende Ringwand 51 aufweist, so daß ein Innenraum 52 mit zylindrischer Gestalt gebildet wird. In diesem Innenraum 52 wird der Stator größtenteils aufgenommen. Lediglich die Gehäusegrundplatte 14 befindet sich außerhalb des Innenraums 52. Am stufenförmigen Übergang zwischen der Gehäusegrundplatte 14 und der Zylinderwand 15 befindet sich ein Axiallager 53, dessen einer Lagerring 54 an der Gehäusegrundplatte 14 und dessen anderer Lagerring 55 in einer stirnseitigen Ausnehmung der Ringwand 51 befestigt ist. Insofern wird also der Rotor 4 und damit das drehbar gelagerte Teil 2 an dem Stator 3, nämlich am Zylinder 7, gelagert. In Abweichung zu den zuvor beschriebenen Ausführungsbeispielen ist überdies vorgesehen, daß sich aus Platzgründen die Kanäle 38 auch bis in die Gehäusegrundplatte 14 hinein erstrecken, wodurch insgesamt eine sehr kurze Bauform realisiert werden kann.

Beim Ausführungsbeispiel der Figur 3 ist keine Rückstellfeder 31 vorgesehen. Durch Wegfall dieser Rückstellfeder 31 verbleibt der Platz für eine weitere Mediumverbindung 35. Die Zurückführung des Kolbens 13 kann dadurch erfolgen, daß im Zylinderinnenraum 21 ein Vakuum erzeugt wird. Alternativ oder auch zusätzlich ist es möglich, daß die Rückführung dadurch erfolgt, daß der Zylinderinnenraum 21 drucklos gemacht wird und daß über mindestens einen Mediumverbindungsweg 35 nochmals Druck zugeführt wird, wodurch der Kolben 13 quasi nach dem Rückstoßprinzip in die zurückgezogene Stellung verbracht wird.

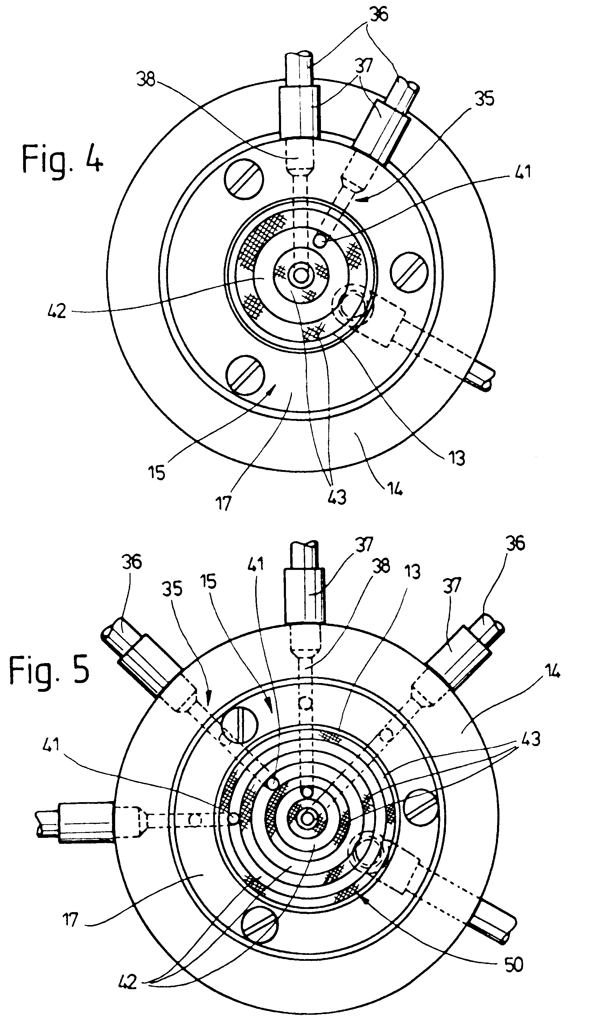

Die Figuren 4 und 5 zeigen Draufsichten auf die Anschlußflächen 23 des Kolbens 13. Die Figur 4 zeigt eine derartige Ansicht beim Ausführungsbeispiel der Figur 1 und die Figur 5 eine entsprechende Ansicht beim Ausführungsbeispiel der Figur 3. Deutlich ist erkennbar, daß die Anschlüsse 37 winkelversetzt zueinander am Umfang des Stators 3 angeordnet sind.

Bei den Ausführungsformen gemäß der Figuren 1, 2, 7, 8, 9 und 10 können die Anschlüsse 37 auch in einer in Achsrichtung verlaufenden Reihe angeordnet werden.

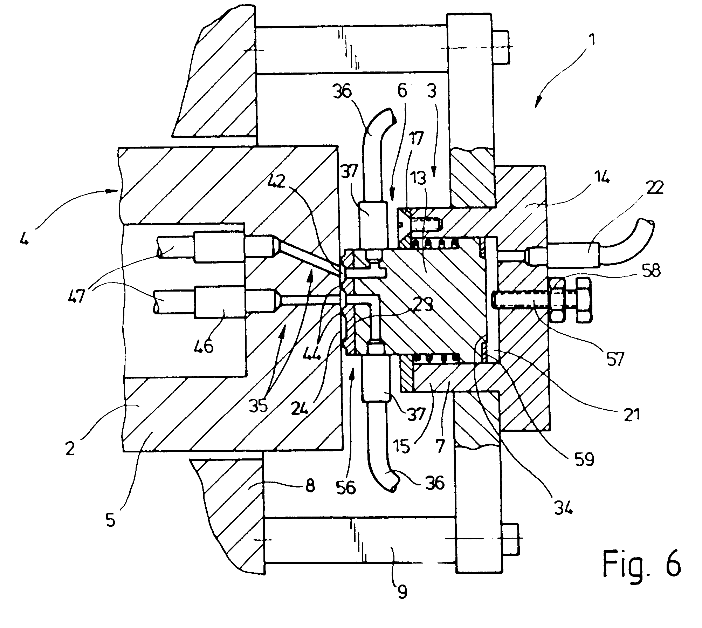

Die Figur 6 zeigt ein weiteres Ausführungsbeispiel einer Drehdurchführung 1, die gegenüber den zuvor beschriebenen Ausführungsbeispielen besonders einfach aufgebaut ist. Es wird im folgenden wiederum nur auf die Unterschiede zu den bereits beschriebenen Ausführungsbeispielen eingegangen. Die Mediumverbindungswege 35 verlaufen nicht -wie zuvor beschrieben- durch die Zylinderwand 15, sondern sie sind über flexible Leitungen 36 direkt dem Kolben 13 zugeführt. Hierzu ragt der Kolben 13 mit einer Teillänge 56 sowohl in der ersten als auch in der zweiten Stellung aus dem Zylinder 7 heraus. Am Umfang dieses herausragenden Teils sind über Anschlüsse 37 die flexiblen Leitungen 36 zugeführt. Die Anschlüsse 37 stehen mit Radialbohrungen 40 bzw. Axialbohrungen 41 des Kolbens in Verbindung. Die Axialbohrungen führen 41 -wie bei den zuvor beschriebenen Ausführungsbeispielen schon erwähnt- zu entsprechenden Ringkanälen 42.

In Abweichung zu den zuvor beschriebenen Ausführungsbeispielen weist der Kolben 13 des Ausführungsbeispiels der Figur 6 keinen Abstandszapfen 33 auf, sondern es ist ein einstellbarer Anschlag 57 vorgesehen, der als die Gehäusegrundplatte 14 durchdringende Einstellschraube ausgebildet ist. Die Einstellschraube ist mit ihrem Gewindeschaft in eine entsprechende Gewindebohrung der Gehäusegrundplatte 14 eingeschraubt und mittels einer Kontermutter 58 gesichert. Um den Zylinderinnenraum 21 abzudichten, ist im Bereich der Kolbenstirnwand 34 eine Ringdichtung 59 vorgesehen.

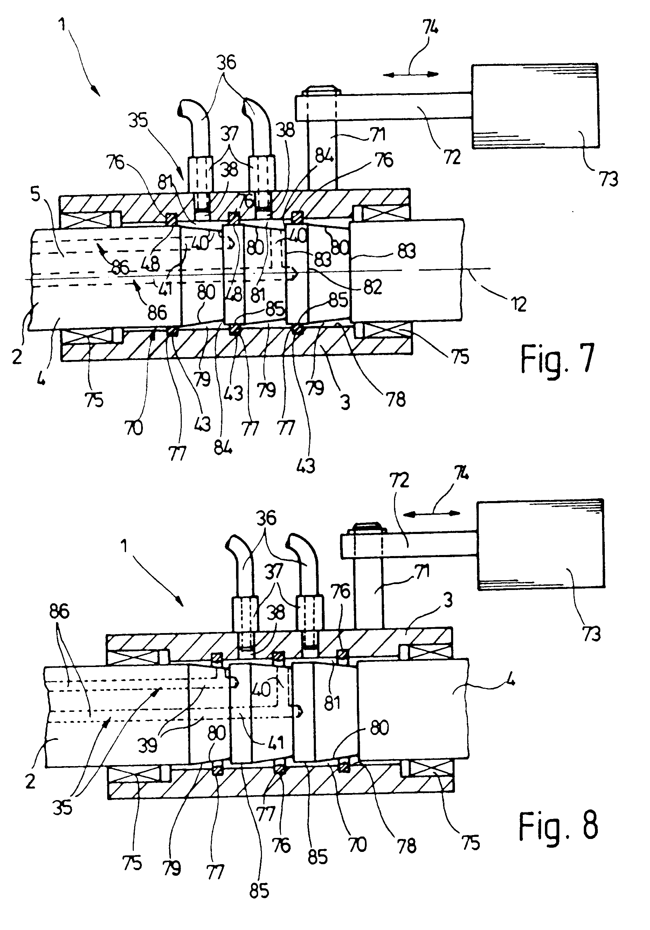

Die Figur 7 zeigt ein weiteres Ausführungsbeispiel einer Drehdurchführung 1 für ein drehbar gelagertes Teil 2. Dieses Teil 2 stellt den Rotor 4 dar, der von einem Stator 3 radial umschlossen wird. Hierzu weist der Stator 3 einen Aufnahmekanal 70 auf, der koaxial zur Drehachse 12 des Rotors 4 verläuft. Gemäß Figur 7 ist der Stator 3 als Hohlzylinder ausgebildet, wobei das Innere des Hohlzylinders den Aufnahmekanal 70 bildet. Ebenso wie bei den zuvor beschriebenen Ausführungsbeispielen handelt es sich bei dem Rotor 4 vorzugsweise um einen Zapfen 5, insbesondere um einen Wellenzapfen, des drehbar gelagerten Teils 2, welches zum Beispiel als Plattenzylinder einer Druckmaschine ausgebildet sein kann.

Der Stator 3 ist in Richtung der Drehachse 12, also axial relativ zum Rotor 4, verschiebbar gelagert. Seine Radialstellung ist fest, das heißt, er ist verdrehgesichert. Für die Axialverschiebung aus einer ersten Stellung in eine zweite Stellung und aus der zweiten Stellung in die erste Stellung weist der Stator 3 einen Radialfortsatz 71 auf, an dem eine Betätigungsstange 72 einer Verstelleinrichtung 73 angreift. Die Betätigungsstange 72 verläuft parallel zur Drehachse 12. Die Verstelleinrichtung 73 kann als manuelle Einrichtung oder pneumatische Einrichtung ausgebildet sein. Auch ist es möglich, hydraulisch oder elektromechanisch die Bewegung der Betätigungsstange 72 und damit die Axialverschiebung des Stators 3 relativ zum Rotor 4 vorzunehmen. Die Bewegung der Betätigungsstange 72 ist mit einem Doppelpfeil 74 gekennzeichnet.

Am Rotor 4 greifen -axial beabstandet voneinanderzwei Radiallager 75 an, die den Stator 3 lagern.

Zur Ausbildung von Mediumverbindungswegen 35 für das Zuleiten eines Saug- und/oder Druckmediums, zum Beispiel Druckluft, zum drehbar gelagerten Teil 2 sind flexible Leitungen 36 vorgesehen, die zu Anschlüssen 37 führen, die an der äußeren Mantelwand des Stators 3 angeordnet sind. Von den Anschlüssen 37 führen Kanäle 38 radial in den Aufnahmekanal 70 des Stators 3. Die Anzahl der Mediumverbindungswege 35 richtet sich nach der Anzahl der notwendigen Steuerfunktionen am drehbar gelagerten Teil 2. In entsprechender Anzahl sind Kanäle 38 axial voneinander beabstandet am Stator 3 vorgesehen. Jede in den Aufnahmekanal 70 mündende Öffnung der Kanäle 38 ist von Dichtelementen 43 beidseitig flankiert, wobei diese Dichtelemente 43 als Dichtringelemente 76 ausgebildet sind, die koaxial zur Drehachse 12 beziehungsweise zur mit der Drehachse 12 identischen Mittelachse des Aufnahmekanals 70 verlaufen. Die Dichtringelemente 76 liegen in Ringvertiefungen 77 ein, die an der Innenmantelwand 78 des Aufnahmekanals 70 ausgebildet sind. Die Dichtringelemente 76 überragen radial die Innenmantelwand 78 derart, daß sie mit dem Rotor 4 dichtend zusammenwirken können.

Der Rotor 4 weist axial voneinander beabstandete Ringnuten 79 auf. Jedem Kanal 38 ist eine Ringnut 79 zugeordnet. Die Ringnuten 79 sind vorzugsweise durch Ringeinstiche am Rotor 4 bei der Herstellung erzeugt worden. Die Ringnuten 79 weisen zur axialen Verschieberichtung des Stators 3 beziehungsweise zur Drehachse 12 des drehbar gelagerten Teils 2 jeweils eine unter einem Winkel geneigte Kegelfläche 80 auf. Diese Kegelflächen 80 begrenzen radial die aufgrund der Ringnuten 79 zwischen dem Rotor 4 und dem Stator 3 gelegene Ringräume 81. Aufgrund der zur Drehachse 12 geneigt verlaufenden Kegelflächen 80 besitzen diese jeweils eine durchmessergrößere Flanke 82 sowie eine durchmesserkleinere Flanke 83. Jede durchmessergrößere Flanke 82 führt über eine Stufe 84 zur durchmesserkleineren Flanke 83 der benachbarten Kegelfläche 80. Aus der Figur 7 ist ersichtlich, daß an jede durchmessergrößere Flanke 82 in axialer Richtung ein zylindrischer Abschnitt 85 anschließt, der im weiteren axialen Verlauf über die Stufe 84 zur durchmesserkleineren Flanke 83 der benachbarten Kegelfläche 80 führt.

In jeden Ringraum 81 münden Kanäle 86, die sich jeweils aus einer Radialbohrung 40 sowie einer Axialbohrung 41 zusammensetzen. Die Axialbohrungen 41 führen zu in der Figur 7 nicht dargestellten Betätigungseinrichtungen, welche über die Mediumverbindungswege 35 durch Druckluftbeaufschlagung im Stillstand des drehbar gelagerten Teils 2 betätigbar sind.

Die Drehdurchführung 1 der Figur 7 arbeitet folgendermaßen: Ausgegangen sei von der Figur 8, die den Stator 3 in einer zweiten Stellung zeigt, die mittels der Verstelleinrichtung 73 herbeigeführt worden ist. Diese zweite Stellung wird eingenommen, wenn sich das drehbar gelagerte Teil 2 in Rotation befindet; beispielsweise wenn die Druckmaschine den Druckbetrieb durchführt. Die Dichtelemente 43 (Dichtringelemente 76) liegen in dieser zweiten Stellung mit Abstand zu den rotorseitigen Wandungen der Ringräume 81. Ein Verschleiß an den Dichtringelementen 76 tritt daher nicht auf. Wird nun das drehbar gelagerte Teil 2 in beliebiger Drehwinkelstellung angehalten, um über die erwähnten Mediumverbindungswege 35 Betätigungsfunktionen auszuführen, so wird mittels der Verstelleinrichtung 73 der Stator 3 derart axial in Richtung der Drehachse 12 relativ zum Rotor 4 verschoben, daß die in Figur 7 dargestellte erste Stellung eingenommen wird. Dabei treten die Dichtringelemente 76 im jeweiligen Bereich der durchmessergrößeren Flanken 82 auf die Kegelflächen 80 und -im Zuge der weiteren Axialbewegung- bis auf die zylindrischen Abschnitte 85, die Dichtgegenelemente 48 bilden. Nunmehr ist es bei jedem Mediumverbindungsweg 35 möglich, über die Leitung 36, den Anschluß 37, den Kanal 38, den Ringraum 81, die Radialbohrung 40 und die Axialbohrung 41 die Druckluft dem drehbar gelagerten Teil 2 zuzuführen. Ist dieser Vorgang beendet, so wird der Stator 3 in die zweite Stellung axial zurückverschoben, in der die Dichtringelemente 76 freigegeben sind.

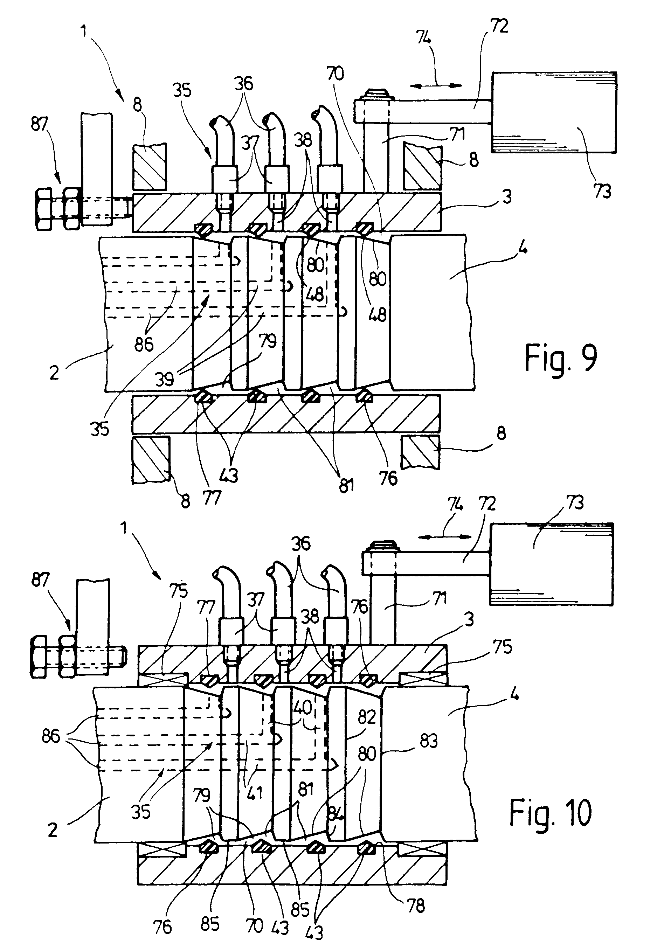

In der Figur 9 ist ein weiteres Ausführungsbeispiel einer Drehdurchführung 1 dargestellt, die nach dem gleichen Prinzip wie die Drehdurchführung 1 des Ausführungsbeispiels der Figur 7 arbeitet. Insofern soll nachstehend lediglich auf die Unterschiede eingegangen werden. Anstelle von zwei Mediumverbindungswegen 35 sind im Ausführungsbeispiel der Figur 9 drei Mediumverbindungswege 35 vorgesehen. Es besteht ferner der Unterschied, daß der Stator 3 nicht auf dem Rotor 4 axial verschieblich lagert, sondern daß die Lagerung am Maschinengestell 8 vorgenommen ist. Die ebenfalls maschinengestellseitig erfolgende Lagerung des Teils 2 ist in Figur 9 nicht dargestellt. Die Axialbewegung des Stators 3 wird in der ersten Stellung von einem einstellbaren Anschlag 87 begrenzt. Gemäß Figur 9, die den Stator 3 in der ersten Stellung zeigt, treten die Dichtelemente 43 zur Abdichtung der Ringräume 81 nicht - wie beim Ausführungsbeispiel der Figur 7- bis auf zylindrische Abschnitte 85 des Rotors 4, sondern legen sich an die Kegelflächen 80 an. Die Dichtungsvorspannung läßt sich durch Kalibrierung des verstellbaren Anschlags 87 einstellen.

Während in der Figur 9 die Drehdurchführung 1 in der ersten Stellung zeigt, in der die Dichtelemente 43 gegen die Kegelflächen 80 im Bereich der durchmessergrößeren Flanken 82 anliegen, so daß die entsprechenden Bereiche der Kegelflächen 80 Dichtgegenelemente 48 bilden, ist in der Figur 10 die zweite Stellung gezeigt, in der ein Abstand zwischen den Dichtelementen 43 und den Dichtgegenelementen 48 besteht. Überdies ist in der Figur 10 die gleiche Lagerung des Stators 3 dargestellt, wie sie bereits zum Ausführungsbeispiel der Figur 7 beschrieben wurde.

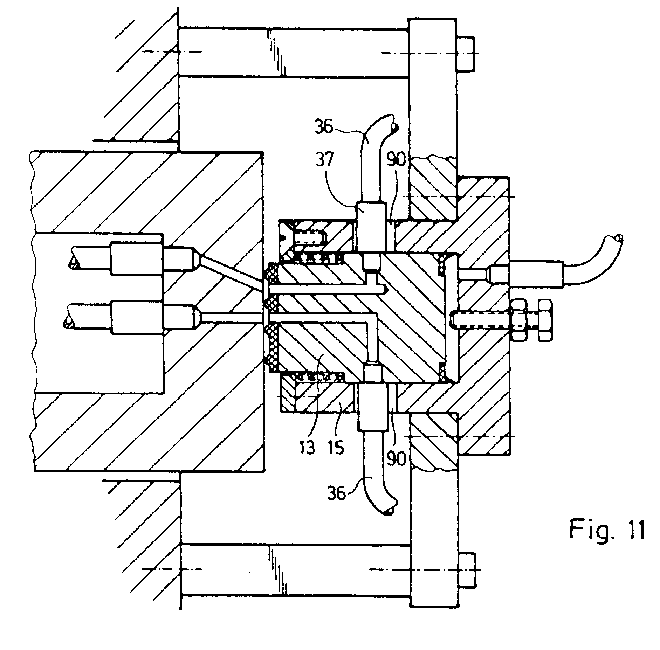

Figur 11 zeigt eine weitere Ausführungsform. Sie unterscheidet sich von der in Figur 6 dargestellten dadurch, daß die Mediumverbidungswege zwar auch mit flexiblen Leitungen 36 direkt dem Kolben 13 zugeführt werden, jedoch dabei durch Aussparungen 90 der Zylinderwand 15 hindurchführen. Die Aussparungen 90 in der Zylinderwand 50 müssen so groß ausgestellt werden, daß die Leitungen 36 bei Verstellbewegungen des Kolbens 13 nicht anstoßen. Auch diese Ausführungsform hat den Vorteil, daß Dichtelemente für die Mediumverbidungswege zwischen Kolben 13 und Zylinderwand 15 nicht erforderlich sind.

## Patentansprüche

1. Drehdurchführung (1) zum Zuleiten eines Saug- und/oder Druckmediums zu einem drehbar gelagerten Teil einer Druckmaschine, mit einem Stator (3) und einem Rotor (4), wobei Stator und Rotor während der unabhängig von der Drehwinkelstellung des Rotors im Stillstand möglichen Zuleitung des Mediums über mit Dichtgegenelementen (48) zusammenwirkenden Dichtelementen (43) zueinander zur Kupplung mindestens eines Mediumverbindungsweges abgedichtet sind, **dadurch gekennzeichnet,** daß Stator (3) und Rotor (4) relativ zueinander axial aus einer ersten Stellung in eine zweite Stellung verschiebbar gelagert sind, wobei in der ersten Stellung die Dichtelemente (43) an den Dichtgegenelementen (48) anliegen und in der zweiten Stellung ein Abstand zwischen den Dichtelementen (43) und den Dichtgegenelementen (48) besteht.

2. Drehdurchführung nach Anspruch 1, **dadurch gekennzeichnet,** daß der Stator (3) eine Anschlußfläche (23) aufweist, die mit einer dem Rotor (4) angehörenden Stirnfläche (24), bei der Verschiebebewegung zusammenwirkt.

3. Drehdurchführung nach einem der vorhergehenden Ansprüche, **dadurch gekennzeichnet,** daß der Stator (3) zum Anfahren der ersten beziehungsweise der zweiten Stellung mittels des gleichen, dem Rotor (4) zuleitbaren Mediums oder eines Fremdmediums verschiebbar ist.

4. Drehdurchführung nach einem der vorhergehenden Ansprüche, **dadurch gekennzeichnet,** daß der Stator (3) von einem Kolben (13) gebildet ist bzw. einen Kolben (13) aufweist, der axial verschieblich in einem ortsfesten Zylinder (7) geführt wird, wobei der Kolben (13) die Anschlußfläche (23) aufweist.

5. Drehdurchführung nach einem der vorhergehenden Ansprüche, **dadurch gekennzeichnet,** daß in die Anschlußfläche (23) beziehungsweise die Stirnfläche (24) Kanäle (45) und in die Stirnfläche (24) beziehungsweise die Anschlußfläche (23) Ringkanäle (42) für die Zuleitung des Mediums münden, wobei die Ringkanäle (42) von Ringdichtungen (44) berandet sind.

6. Drehdurchführung nach einem der vorhergehenden Ansprüche, **dadurch gekennzeichnet,** daß eine zur Drehachse (12) des Rotors (4) koaxiale Mediumverbindung (35) sowohl an der Stirnfläche (24) als auch an der Anschlußfläche (23) als Kanal (41, 45) ausgebildet ist, wobei mindestens eines der in der Stirnfläche (24) beziehungsweise der Anschlußfläche (23) liegenden Kanalenden von einer Ringdichtung (44) umgeben ist.

7. Drehdurchführung nach einem der vorhergehenden Ansprüche, **dadurch gekennzeichnet,** daß die Ringdichtungen (44) Axialdichtungen bilden.

8. Drehdurchführung nach einem der vorhergehenden Ansprüche, **dadurch gekennzeichnet,** daß die Ringkanäle (42) koaxial zueinander und koaxial zur Drehachse (12) liegen.

9. Drehdurchführung nach einem der vorhergehenden Ansprüche, **dadurch gekennzeichnet,** daß in die Mantelfläche (25) des Kolbens (13) mit den Kanälen (41) beziehungsweise Ringkanälen (42) der Anschlußfläche (23) verbundene Ringnuten (28) münden, die in der ersten Stellung des Stators (3) mit in die Innenfläche (18) des Zylinders (7) mündenden Zuleitungen (38) für das Medium kommunizieren.

10. Drehdurchführung nach einem der vorhergehenden Ansprüche 1 bis 8, **dadurch gekennzeichnet,** daß in die Mantelfläche (25) des Kolbens (13) mit den Kanälen (41) beziehungsweise Ringkanälen (42) der Anschlußfläche (23) verbundene Radialbohrungen (40) münden, die in der ersten Stellung des Stators (3) mit in die Innenfläche (18) des Zylinders (7) mündenden Ringnuten kommunizieren und daß über die Ringnuten das Medium zuführbar ist.

11. Drehdurchführung nach einem der vorhergehenden Ansprüche, **dadurch gekennzeichnet,** daß beidseitig der Ringnuten (28) Dichtringe (27) angeordnet sind.

12. Drehdurchführung nach einem der vorhergehenden Ansprüche, **dadurch gekennzeichnet,** daß der Kolben (13) von einer Rückstellfeder (31) beaufschlagt ist, die ihn in Richtung der ersten oder zweiten Stellung drängt.

13. Drehdurchführung nach einem der vorhergehenden Ansprüche, **dadurch gekennzeichnet,** daß die Ringdichtungen (44) und/oder die Dichtringe (27) und/oder die Abdichtelemente (49, 50) an den Kolben (13) angespritzt oder anvulkanisiert sind.

14. Drehdurchführung nach einem der vorhergehenden Ansprüche, **dadurch gekennzeichnet,** daß am Zylinder (7) ein Axiallager (53) für den Rotor (4) angeordnet ist.

15. Drehdurchführung nach einem der vorhergehenden Ansprüche, **dadurch gekennzeichnet,** daß der Stator (3) über flexible Leitungen (36) an das Medium angeschlossen ist.

16. Drehdurchführung nach Anspruch 15, **dadurch gekennzeichnet,** daß der Stator (3) Anschlüsse (37) für die flexiblen Leitungen (36) aufweist und daß die Anschlüsse (37) mit den Ringkanälen (42) beziehungsweise Kanälen (41) der Anschlußfläche (23) komnunizierend verbunden sind.

17. Drehdurchführung nach einem der vorhergehenden Ansprüche, **dadurch gekennzeichnet,** daß der Kolben (13) mit einer Teillänge (56) aus dem Zylinder (7) herausragt und daß die flexiblen Leitungen (36) zur Mantelfläche (25) des herausragenden Teils des Kolbens (13) führen.

18. Drehdurchführung nach einem der vorhergehenden Ansprüche, **dadurch gekennzeichnet,** daß die Zylinderwand (15) Aussparungen (90) aufweist, durch die die flexiblen Leitungen (36) hindurchgeführt und direkt mit dem Kolben (13) verbunden sind.

19. Drehdurchführung nach einem der vorhergehenden Ansprüche, **dadurch gekennzeichnet,** daß der Stator (3) einen Aufnahmekanal (70) für den Rotor (4) beziehungsweise für einen Abschnitt des Rotors (4) aufweist und axial zu dem Rotor (4) zur Einnahme der ersten beziehungsweise zweiten Stellung verschiebbar ist.

20. Drehdurchführung nach einem der vorhergehenden Ansprüche, **dadurch gekennzeichnet,** daß der Rotor (4) und/oder die Wandung des Aufnahmekanals (70) zur Verschieberichtung unter einem Winkel verlaufende Kegelflächen (80) beziehungsweise Dichtflächen (48) zur Bildung von Ringnuten (79) aufweist, daß diese in der ersten Stellung gegen Dichtringelemente (76) der Wandung des Aufnahmekanals (70) und/oder des Rotors (4) treten und in der zweiten Stellung ein Abstand zu den Dichtringelementen (76) einnehmen.

21. Drehdurchführung nach einem der vorhergehenden Ansprüche, **dadurch gekennzeichnet,** daß die Kegelflächen (80) Ringräume (81), zwischen Stator (3) und Rotor (4) begrenzen.

22. Drehdurchführung nach einem der vorhergehenden Ansprüche, **dadurch gekennzeichnet,** daß an eine durchmessergrößere Flanke (82) jeder Kegelfläche (80) eine Stufe (84) angrenzt, die zu einer durchmesserkleineren Flanke (83) der benachbarten Kegelfläche (80) abfällt.

23. Drehdurchführung nach einem der vorhergehenden Ansprüche, **dadurch gekennzeichnet,** daß in die Ringnuten (79) Kanäle (86) des Rotors (4) für das Medium münden.

24. Drehdurchführung nach einem der vorhergehenden Ansprüche, **dadurch gekennzeichnet,** daß in den Aufnahmekanal (70) Zuleitungen (38) für das Medium münden, die in der ersten Stellung mit den jeweiligen Ringnuten (79) kommunizieren.

25. Drehdurchführung nach einem der vorhergehenden Ansprüche, **dadurch gekennzeichnet,** daß am Stator (3) ein Lager (75) für den Rotor (4) angeordnet ist.

26. Drehdurchführung nach einem der vorhergehenden Ansprüche, **dadurch gekennzeichnet,** daß der Stator (3) axial verschiebbar auf dem Rotor (4) gelagert ist.

27. Drehdurchführung nach einem der vorhergehenden Ansprüche, **dadurch gekennzeichnet,** daß der Stator (3) an einem ortsfesten Maschinenteil (8) axial verschiebbar gelagert ist.

28. Drehdurchführung nach einem der vorhergehenden Ansprüche, **dadurch gekennzeichnet,** daß der Rotor (4) an einem ortsfesten Maschinengestell (8) drehbar gelagert ist.

29. Drehdurchführung nach einem der vorhergehenden Ansprüche, **dadurch gekennzeichnet,** daß jede Kegelfläche (80) an ihrer durchmessergrößeren Flanke (82) in einen zylindrischen Abschnitt (85) des Rotors (4) übergeht, an den in der ersten Stellung das entsprechende Dichtringelement (76) anliegt.

## Claims

1. Rotary bushing (1) for supplying a suction and/or pressure medium to a rotatably mounted part of a printing machine, with a stator (3) and a rotor (4), stator and rotor being, during the supply of the medium which is possible irrespective of the angle-of-rotation position of the rotor at a standstill, sealed in relation to one another, via sealing elements (43) interacting with sealing counter-elements (48), for coupling at least one medium connection path, characterized in that stator (3) and rotor (4) are mounted axially displaceably relative to one another from a first position into a second position, the sealing elements (43) bearing against the sealing counter-elements (48) in the first position and a distance existing between the sealing elements (43) and the sealing counter-elements (48) in the second position.

2. Rotary bushing according to Claim 1, characterized in that the stator (3) has a junction surface (23) which interacts with an end surface (24), belonging to the rotor (4) during the displacement movement.

3. Rotary bushing according to one of the preceding claims, characterized in that, for approaching the first or the second position, the stator (3) can be displaced by means of the same medium which can be supplied to the rotor (4) or of an external medium.

4. Rotary bushing according to one of the preceding claims, characterized in that the stator (3) is formed by a piston (13) or has a piston (13) which is guided axially displaceably in a stationary cylinder (7), the piston (13) having the junction surface (23).

5. Rotary bushing according to one of the preceding claims, characterized in that, for the supply of the medium, ducts (45) open into the junction surface (23) or the end surface (24) and annular ducts (42) open into the end surface (24) or the junction surface (23), the annular ducts (42) being bordered by annular seals (44).

6. Rotary bushing according to one of the preceding claims, characterized in that a medium connection (35) coaxial to the axis (12) of rotation of the rotor (4) is designed as a duct (41, 45) both on the end surface (24) and on the junction surface (23), at least one of the duct ends lying in the end surface (24) or the junction surface (23) being surrounded by an annular seal (44).

7. Rotary bushing according to one of the preceding claims, characterized in that the annular seals (44) form axial seals.

8. Rotary bushing according to one of the preceding claims, characterized in that the annular ducts (42) lie coaxially with one another and coaxially with the axis (12) of rotation.

9. Rotary bushing according to one of the preceding claims, characterized in that annular grooves (28), which are connected to the ducts (41) or annular ducts (42) of the junction surface (23) and which in the first position of the stator (3) communicate with supply lines (38) for the medium opening into the inner surface (18) of the cylinder (7), open into the outer surface (25) of the piston (13).

10. Rotary bushing according to one of Claims 1 to 8, characterized in that radial bores (40), which are connected to the ducts (41) or annular ducts (42) of the junction surface (23) and which in the first position of the stator (3) communicate with annular grooves opening into the inner surface (18) of the cylinder (7), open into the outer surface (25) of the piston (13) and in that the medium can be supplied via the annular grooves.

11. Rotary bushing according to one of the preceding claims, characterized in that sealing rings (27) are arranged on both sides of the annular grooves (28).

12. Rotary bushing according to one of the preceding claims, characterized in that the piston (13) is acted upon by a return spring (31) which pushes it in the direction of the first or second position.

13. Rotary bushing according to one of the preceding claims, characterized in that the annular seals (44) and/or the sealing rings (27) and or the sealing elements (49, 50) are injection-moulded or vulcanized onto the piston (13).

14. Rotary bushing according to one of the preceding claims, characterized in that an axial bearing (53) for the rotor (4) is arranged on the cylinder (7).

15. Rotary bushing according to one of the preceding claims, characterized in that the stator (3) is connected to the medium via flexible lines (36).

16. Rotary bushing according to Claim 15, characterized in that the stator (3) has connections (37) for the flexible lines (36) and in that the connections (37) are connected to the annular ducts (42) or ducts (41) of the junction surface (23) in a communicating manner.

17. Rotary bushing according to one of the preceding claims, characterized in that the piston (13) projects with a part length (56) from the cylinder (7) and in that the flexible lines (36) lead to the outer surface (25) of the projecting part of the piston (13).

18. Rotary bushing according to one of the preceding claims, characterized in that the cylinder wall (15) has cutouts (90), through which the flexible lines (36) are guided and connected directly to the piston (13).

19. Rotary bushing according to one of the preceding claims, characterized in that the stator (3) has a receiving duct (70) for the rotor (4) or for a section of the rotor (4) and is displaceably axially in relation to the rotor (4) for taking up the first or second position.

20. Rotary bushing according to one of the preceding claims, characterized in that the rotor (4) and/or the wall of the receiving duct (70) has conical surfaces (80) or sealing surfaces (48) for forming annular grooves (79), which run at an angle in relation to the displacement direction, in that these surfaces come against sealing-ring elements (76) of the wall of the receiving duct (70) and/or of the rotor (4) in the first position and assume a distance from the sealing-ring elements (76) in the second position.

21. Rotary bushing according to one of the preceding claims, characterized in that the conical surfaces (80) delimit annular spaces (81) between stator (3) and rotor (4).

22. Rotary bushing according to one of the preceding claims, characterized in that a step (84) adjoins a flank (82) of greater diameter of each conical surface (80), which step falls away to a flank (83) of smaller diameter of the neighbouring conical surface (80).

23. Rotary bushing according to one of the preceding claims, characterized in that ducts (86) of the rotor (4) for the medium open into the annular grooves (79).

24. Rotary bushing according to one of the preceding claims, characterized in that supply lines (38) for the medium, which communicate with the respective annular grooves (79) in the first position, open into the receiving duct (70).

25. Rotary bushing according to one of the preceding claims, characterized in that a bearing (75) for the rotor (4) is arranged on the stator (3).

26. Rotary bushing according to one of the preceding claims, characterized in that the stator (3) is mounted axially displaceably on the rotor (4).

27. Rotary bushing according to one of the preceding claims, characterized in that the stator (3) is mounted axially displaceably on a stationary machine part (8).

28. Rotary bushing according to one of the preceding claims, characterized in that the rotor (4) is mounted rotatably on a stationary machine frame (8).

29. Rotary bushing according to one of the preceding claims, characterized in that, at its flank (82) of greater diameter, each conical surface (80) changes into a cylindrical section (85) of the rotor (4), against which the corresponding sealing-ring element (76) bears in the first position.

## Revendications

1. Passage rotatif (1) pour l'alimentation en fluide aspiré et/ou refoulé d'une pièce montée rotative et faisant partie d'une machine à imprimer, comprenant un stator (3) et un rotor (4), le stator et le rotor étant rendus étanches l'un par rapport à l'autre, pour le raccord d'au moins une voie de communication pour le fluide, par des éléments d'étanchéité (43) coopérant avec des éléments complémentaires d'étanchéité (48) pendant l'alimentation en le fluide qui est possible à l'arrêt, indépendamment de la position angulaire du rotor, caractérisé en ce que le stator (3) et le rotor (4) sont montés déplaçables axialement en translation l'un par rapport à l'autre d'une première position à une seconde position, les éléments d'étanchéité (43) étant en appui contre les éléments complémentaires d'étanchéité (48) à la première position et une distance séparant les éléments d'étanchéité (43) des éléments complémentaires d'étanchéité (48) à la seconde position.

2. Passage rotatif selon la revendication 1, caractérisé en ce que le stator (3) comprend une surface de raccord (23) qui coopère avec une surface extrême (24), qui fait partie du rotor (4), pendant un mouvement de translation.

3. Passage rotatif selon l'une des revendications précédentes, caractérisé en ce que le stator (3) est déplaçable par le même fluide que celui en lequel le rotor (4) peut être alimenté ou par un fluide étranger pour être mis à la première ou à la seconde position.

4. Passage rotatif selon l'une des revendications précédentes, caractérisé en ce que le stator (3) est formé d'un piston (13) ou comprend un piston (13) qui est guidé déplaçable axialement dans un cylindre fixe (7), le piston (13) comprenant la surface de raccord (23).

5. Passage rotatif selon l'une des revendications précédentes, caractérisé en ce que des canaux (45) débouchent dans la surface de raccord (23), respectivement dans la surface extrême (44) et des canaux annulaires (42) d'alimentation en le fluide débouchent dans la surface extrême (24), respectivement dans la surface de raccord (23), les canaux annulaires (42) étant bordés de joints d'étanchéité annulaires (44).

6. Passage rotatif selon l'une des revendications précédentes, caractérisé en ce qu'une communication pour le fluide (35), qui est coaxiale à l'axe de rotation (12) du rotor(4), est conformée en canal (41, 45) aussi bien sur la surface extrême (24) que sur la surface de raccord (23), au moins l'une des extrémités du canal située sur la surface extrême (24), respectivement sur la surface de raccord (23) étant entourée d'un joint d'étanchéité annulaire (44).

7. Passage rotatif selon l'une des revendications précédentes, caractérisé en ce que les joints d'étanchéité annulaires (44) forment des joints d'étanchéité axiaux.

8. Passage rotatif selon l'une des revendications précédentes, caractérisé en ce que les canaux annulaires (42) sont coaxiaux l'un par rapport à l'autre et coaxiaux par rapport à l'axe de rotation (12).

9. Passage rotatif selon l'une des revendications précédentes, caractérisé en ce que des gorges annulaires (28) raccordées aux canaux (41), respectivement aux canaux annulaires (42) de la surface de raccord (23) débouchent dans l'enveloppe (25) du piston (13) et communiquent avec les alimentations (38) en le fluide qui débouchent dans la surface intérieure (18) du cylindre (7) lorsque le stator (3) est à la première position.

10. Passage rotatif selon l'une des revendications 1 à 8, caractérisé en ce que des trous radiaux (40) reliés aux canaux (41), respectivement aux canaux annulaires (42) de la surface de raccord (23) débouchent dans l'enveloppe (25) du piston (13) et communiquent avec les gorges annulaires débouchant dans la surface intérieure (18) du cylindre (13) lorsque le stator (3) est à la première position et le fluide peut être alimenté par les gorges annulaires.

11. Passage rotatif selon l'une des revendications précédentes, caractérisé en ce que des anneaux d'étanchéité (27) sont disposés des deux côtés des gorges annulaires (28).

12. Passage rotatif selon l'une des revendications précédentes, caractérisé en ce que le piston (13) est soumis à la force d'un ressort de rappel (31) qui le repousse vers la première ou la seconde position.

13. Passage rotatif selon l'une des revendications précédentes, caractérisé en ce que les joints d'étanchéité annulaire (44) et/ou les anneaux d'étanchéité (27) et/ou les éléments d'étanchéité (49, 50) sont rapportés par pulvérisation ou vulcanisation sur le piston (13).

14. Passage rotatif selon l'une des revendications précédentes, caractérisé en ce qu'un palier de butée (53) destiné au rotor (4) est disposé sur le cylindre (7).

15. Passage rotatif selon l'une des revendications précédentes, caractérisé en ce que le stator (3) est raccordé au fluide par des conduits souples (36).

16. Passage rotatif selon la revendication 15, caractérisé en ce que le stator (3) comporte des raccords (37) aux conduits souples (36) et en ce que les raccords (37) sont reliés de manière à communiquer avec les canaux annulaires (42), respectivement avec les canaux (41) de la surface de raccord (23).

17. Passage rotatif selon l'une des revendications précédentes, caractérisé en ce que le piston (13) déborde sur une partie de sa longueur (56) du cylindre (7) et en ce que les conduits souples (36) mènent à l'enveloppe (25) de la partie du piston (13) qui déborde.

18. Passage rotatif selon l'une des revendications précédentes, caractérisé en ce que la cloison (15) du cylindre comporte des lumières (90) par lesquelles les conduits souples (36) passent et sont reliés directement au piston (13).

19. Passage rotatif selon l'une des revendications précédentes, caractérisé en ce que le stator (3) comporte un canal (70) de logement du rotor (4) ou d'une partie du rotor (4) et est déplaçable axialement vers le rotor (4) pour occuper la première ou la seconde position.

20. Passage rotatif selon l'une des revendications précédentes, caractérisé en ce que le rotor (4) et/ou la paroi du canal de logement (70) comporte des surfaces coniques (80) qui inscrivent un angle avec la direction de déplacement ou des surfaces d'étanchéité (48) pour la formation de gorges annulaires (79), en ce que celles-ci se placent à la première position contre des éléments annulaires d'étanchéité (76) de la paroi du canal de logement (70) et/ou du rotor (4) et, à la seconde position, se trouvent à distance des éléments annulaires d'étanchéité (76).

21. Passage rotatif selon l'une des revendications précédentes, caractérisé en ce que les surfaces coniques (80) délimitent des espaces annulaires (81) entre stator (3) et rotor (4).

22. Passage rotatif selon l'une des revendications précédentes, caractérisé en ce qu'un épaulement (84) avoisinant un flanc (82) de diamètre maximal de chaque surface conique (80) descend vers un flanc (83) de diamètre minimal de la surface conique voisine (80).

23. Passage rotatif selon l'une des revendications précédentes, caractérisé en ce que des canaux (86) du rotor (4) destinés au fluide débouchent dans les gorges annulaires (79).

24. Passage rotatif selon l'une des revendications précédentes, caractérisé en ce que les alimentations (38) en le fluide débouchent dans le canal de logement (70) et communiquent à la première position avec les gorges annulaires correspondantes (79).

25. Passage rotatif selon l'une des revendications précédentes, caractérisé en ce qu'un palier (75) destiné au rotor (4) est disposé sur le stator (3).

26. Passage rotatif selon l'une des revendications précédentes, caractérisé en ce que le stator (3) est monté déplaçable axialement sur le rotor (4).

27. Passage rotatif selon l'une des revendications précédentes, caractérisé en ce que le stator (3) est monté déplaçable axialement sur un élément fixe (8) de la machine.

28. Passage rotatif selon l'une des revendications précédentes, caractérisé en ce que le rotor (4) est monté rotatif sur un châssis fixe (8) de la machine.

29. Passage rotatif selon l'une des revendications précédentes, caractérisé en ce que le flanc (82) de diamètre maximal de chaque surface conique (80) forme une transition avec une partie cylindrique (85) du rotor (4) sur laquelle l'élément annulaire correspondant d'étanchéité (76) est en appui à la première position.
